# EUROPÄISCHE PATENTSCHRIFT

(11) **EP 2 730 895 B1**
(45) Veröffentlichungstag und Bekanntmachung des Hinweises auf die Patenterteilung: **10.08.2016**
(21) Anmeldenummer: 13190183.7
(22) Anmeldetag: 25.10.2013
(51) Int. Cl.: G01D 5/347, G01D 5/26, G01B 11/24

(54) **Optische Positionsmesseinrichtung**
Optical positioning device
Dispositif optique de mesure de la position

(30) Priorität: 09.11.2012 DE 102012021935
(43) Veröffentlichungstag der Anmeldung: 14.05.2014
(73) Patentinhaber: Dr. Johannes Heidenhain GmbH, 83301 Traunreut (DE)
(72) Erfinder: Holzapfel, Wolfgang, 83119 Obing (DE); Drescher, Jörg, 83122 Samerberg (DE); Meissner, Markus, 83236 Übersee (DE); Joerger, Ralph, 83278 Traunstein (DE); Musch, Bernhard, 83301 Traunreut (DE); Kälberer, Thomas, 86529 Schrobenhausen (DE)

(56) Entgegenhaltungen:
- EP-A1- 2 520 906
- EP-A2- 1 923 672
- EP-A2- 2 450 672
- US-A1- 2005 174 111
- US-A1- 2010 296 068

## Beschreibung

Die vorliegende Erfindung betrifft eine optische Positionsmesseinrichtung.

Aus der US 2012/105862 A1 der Anmelderin ist mit dem dort beschriebenen zweiten Ausführungsbeispiel eine optische Positionsmesseinrichtung bekannt, die zwei zueinander bewegliche Maßverkörperungen umfasst. Eine erste Maßverkörperung, die in der erwähnten Druckschrift als Abtastgitter bezeichnet wird, umfasst eine als Auflicht-Lineargitter ausgebildete erste Messteilung. Eine zweite Maßverkörperung, die in der Druckschrift als Teilscheibe bezeichnet wird, umfasst eine zweite Messteilung, die aus einem Durchlicht-Radialgitter und einem Reflektor besteht. Die erste Maßverkörperung und die zweite Maßverkörperung sind relativ zueinander beweglich angeordnet; beide Maßverkörperungen sind hierbei unabhängig voneinander beweglich. Die erste Maßverkörperung ist entlang einer ersten linearen Messrichtung beweglich angeordnet; die zweite Maßverkörperung ist drehbar um eine Rotationsachse angeordnet. Mit Hilfe dieser Positionsmesseinrichtung werden Positionssignale bzgl. der Position der jeweiligen Maßverkörperung(en) erzeugt, die in einer möglichen Anwendung einer nachgeordneten Auswerteeinheit zugeführt werden, welche darüber die Positionierung von Maschinenkomponenten steuert.

Um eine derartige Positionsmesseinrichtung Maschinen für hochgenaue Anwendungen einsetzen zu können, wird im Messbetrieb zur Korrektur der üblicherweise vorhandenen kurzreichweitigen Gitterfehler der verwendeten Messteilungen eine maßverkörperungsabhängige Positionskorrekturtabelle eingesetzt. Eine derartige Positionskorrekturtabelle wird z.B. bei der Fertigung der entsprechenden Messteilungen oder bei der Kalibrierung der Maschine erstellt. Die darin abgelegten Korrekturdaten werden dann im Messbetrieb zur Korrektur der erzeugten Positionssignale verwendet. Um die vorliegenden Gitterfehler auf diese Art und Weise korrigieren zu können, muss die jeweilige Positionskorrekturtabelle zur zugehörigen Messteilung in Bezug gesetzt werden; nachfolgend wird dies als Referenzierung bezeichnet. Zur Referenzierung ist hierbei die messtechnische Erfassung der Position eines abtastenden Strahlenbündels an einer definierten Referenzposition auf den verwendeten Messteilungen erforderlich, um im Messbetrieb dann die jeweilige Positionskorrekturtabelle auf die Referenzposition bezogen verwenden zu können. Die entsprechende Referenzposition wird hierbei üblicherweise durch ein oder mehrere Markierungen bzw. Referenzmarkierungen auf der jeweiligen Maßverkörperung vorgegeben. Wenn eine derartige Referenzmarkierung in die Messteilung integriert wird, resultiert jedoch eine unerwünschte Beeinträchtigung der Positionssignale.

Im Fall der aus der US 2012/105862 A1 bekannten optischen Positionsmesseinrichtung mit unabhängig voneinander positionierbaren Maßverkörperungen, respektive Messteilungen, ist für jede der beiden verwendeten Messteilungen eine derartige Referenzierung nötig.

Neben der Referenzierung im Fall des Einsatzes einer Positionskorrekturtabelle kann eine Referenzierung insbesondere auch in inkrementalen Positionsmesseinrichtungen erforderlich sein, um an einer bekannten Position entlang der Messstrecke einen Absolutbezug der Inkrementalmessung herzustellen; auch bei einer derartigen Referenzierung können die o.g. Probleme auftreten.

Im folgenden soll der Begriff Referenzierung die beiden vorab erläuterten Vorgehens-Varianten umfassen, d.h. sowohl die messtechnische Erfassung der Position eines abtastenden Strahlenbündels an einer definierten Referenzposition auf den verwendeten Messteilungen als auch die Herstellung eines absoluten Positionsbezugs bei einer Inkrementalmessung.

Aufgabe der vorliegenden Erfindung ist es, eine optische Positionsmesseinrichtung anzugeben, die eine Referenzierung mindestens einer Messteilung ermöglicht, ohne dass dadurch die eigentliche Positionsmessung signifikant gestört wird.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung umfasst eine erste Maßverkörperung mit einer ersten Messteilung, welche entlang einer ersten Messrichtung beweglich angeordnet ist. An mindestens einer definierten Position entlang der ersten Messrichtung weist die erste Maßverkörperung eine räumlich begrenzte erste Markierung auf, die sich von der ersten Messteilung unterscheidet. Ferner vorgesehen ist eine zweite Maßverkörperung mit einer zweiten Messteilung, welche entlang einer zweiten Messrichtung beweglich angeordnet ist. Die zweite Maßverkörperung weist an mindestens einer Position eine zweite Referenzmarkierung auf, die nur dann zur Erzeugung mindestens eines zweiten Referenzsignals an einer Referenzposition der zweiten Maßverkörperung nutzbar ist, wenn sich die erste Maßverkörperung in derjenigen definierten Position entlang der ersten Messrichtung befindet, die durch die erste Markierung vorgegeben ist.

Es kann vorgesehen sein, dass
- die erste Maßverkörperung als erste Messteilung ein Lineargitter umfasst, das periodisch entlang einer ersten linearen Messrichtung (x) angeordnete Teilungsbereiche aufweist und
- die zweite Maßverkörperung als zweite Messteilung ein kreisringförmiges Gitter umfasst, das periodisch entlang der Kreisumfangsrichtung angeordnete Teilungsbereiche aufweist und um eine Rotationsachse drehbar angeordnet ist, so dass sich die zweite Messrichtung entlang des Kreisumfangs erstreckt.

In einer weiteren möglichen Ausführungsform umfasst
- die erste Maßverkörperung als erste Messteilung ein Lineargitter, das periodisch entlang einer ersten linearen Messrichtung angeordnete Teilungsbereiche aufweist und
- die zweite Maßverkörperung als zweite Messteilung ein weiteres Lineargitter, das periodisch entlang einer zweiten linearen Messrichtung angeordnete Teilungsbereiche umfasst, wobei die zweite Messrichtung senkrecht zur ersten Messrichtung orientiert ist.

Mit Vorteil ist
- die erste Messteilung als Auflichtphasengitter ausgebildet, das periodisch angeordnete Teilungsbereiche mit unterschiedlichem Phasenhub aufweist und
- die zweite Maßverkörperung umfasst als zweite Messteilung mindestens ein Durchlichtgitter und einen Reflektor, wobei sich das Durchlichtgitter und der Reflektor entlang der zweiten Messrichtung erstrecken.

Dabei kann das Durchlichtgitter als kombiniertes Radial-Zirkulargitter ausgebildet sein, das periodisch angeordnete Teilungsbereiche mit unterschiedlichen Beugungseigenschaften aufweist.

In einer vorteilhaften Ausführungsform ist vorgesehen, dass die erste Markierung derart ausgebildet ist, dass darüber ein Signaleinbruch der detektierten Signale an der mindestens einen definierten Position entlang der ersten Messrichtung und eine Schaltfunktion zum selektiven Aktivieren der zweiten Referenzmarkierung resultiert.

Hierbei kann die erste Markierung mindestens eine erste und eine zweite Teilmarkierung umfassen.

Dabei ist es möglich, dass die erste Teilmarkierung entweder
- mindestens einen Absorberbereich umfasst, der in die erste Messteilung integriert angeordnet ist und darauf einfallende Teilstrahlenbündel lediglich gering oder nicht reflektiert oder
- mindestens eine Linienstruktur umfasst, die in die erste Messteilung integriert angeordnet ist und die Linienstruktur ein Lineargitter aufweist, dessen Teilungsbereiche gegenüber den Teilungsbereichen der ersten Messteilung verdreht angeordnet sind.

Die zweite Teilmarkierung kann mindestens eine Linienstruktur umfassen, die in die erste Messteilung integriert angeordnet ist, wobei die Linienstruktur ein Lineargitter aufweist, dessen Teilungsbereiche gegenüber den Teilungsbereichen der ersten Messteilung verdreht angeordnet sind.

Mit Vorteil ist vorgesehen, dass die erste Markierung an einem Längsende der ersten Messteilung angeordnet ist.

Es ist möglich, dass die erste und zweite Teilmarkierung jeweils eine Ausdehnung besitzen, die kleiner als der Durchmesser des Teilstrahlenbündels ist, welches diese abtastet.

In einer Ausführungsform kann vorgesehen sein, dass die erste Markierung als Referenzmarkierung ausgebildet ist und zur Erzeugung mindestens eines ersten Referenzsignals an einer Referenzposition der ersten Maßverkörperung dient und nur dann ein zweites Referenzsignal erzeugbar ist, wenn sich die erste Maßverkörperung in deren Referenzposition befindet.

Die zweite Referenzmarkierung kann derart ausgebildet sein, dass diese nur dann von mindestens einem abtastenden Teilstrahlenbündel beaufschlagbar ist, wenn sich die erste Maßverkörperung in derjenigen definierten Position entlang der ersten Messrichtung befindet, die durch die erste Markierung vorgegeben ist.

Hierbei ist es möglich, dass die zweite Referenzmarkierung als mindestens ein reflektierender Referenzbereich ausgebildet ist, der an der Referenzposition der zweiten Maßverkörperung senkrecht zur zweiten Messrichtung benachbart zum Reflektor der zweiten Messteilung angeordnet ist.

Mit Vorteil umfasst die erfindungsgemäße optische Positionsmesseinrichtung
- eine Lichtquelle und
- eine Detektoranordnung mit mehreren Detektorelementen, wobei
- ein von der Lichtquelle her einfallendes Strahlenbündel an der ersten Messteilung eine Aufspaltung in zwei Teilstrahlenbündel erfährt,
- die Teilstrahlenbündel in Richtung des Durchlichtgitters der zweiten Messteilung propagieren und dort eine Beugung erfahren,
- die gebeugten Teilstrahlenbündel in Richtung des Reflektors der zweiten Messteilung propagieren und dort eine Rückreflexion in Richtung des Durchlichtgitters der zweiten Messteilung erfahren,
- die Teilstrahlenbündel in Richtung des Durchlichtgitters der zweiten Messteilung propagieren und dort eine erneute Beugung erfahren,
- die gebeugten Teilstrahlenbündel in Richtung der ersten Messteilung propagieren, wo eine Überlagerung der Teilstrahlenbündel resultiert und
- die überlagerten Teilstrahlenbündel in Richtung der Detektorelemente der Detektoranordnung propagieren, so dass
- aus der optischen Abtastung der beiden Maßverkörperungen Positionssignale bzgl. der Relativposition der beiden Maßverkörperungen erzeugbar sind.

Über die erfindungsgemäßen Maßnahmen ist nunmehr auch die Referenzierung von zwei unabhängig voneinander beweglichen Messteilungen möglich, ohne dass hierdurch die eigentliche Positionsmessung im Messbetrieb beeinträchtigt wird. Die Positionskorrekturtabellen für die beiden Messteilungen können somit z.B. im eigentlichen Messbetrieb zur Korrektur von evtl. vorliegenden Gitterfehlern eingesetzt werden; eine hochgenaue Positionsbestimmung ist derart sichergestellt.

Selbstverständlich kann aber auch lediglich die Referenzierung einer einzigen Messteilung über die erfindungsgemäßen Maßnahmen erfolgen.

Ferner wird der verfügbare Messbereich pro Messteilung, der jeweils durch die Erstreckung der Messteilung entlang der jeweiligen Messrichtung vorgegeben ist, nicht durch die Markierung bzw. Referenzmarkierung auf der jeweils anderen Messteilung eingeschränkt.

Die vorliegende Erfindung ist hierbei nicht nur in der eingangs erwähnten Variante einer Positionsmesseinrichtung verwendbar, deren erste Maßverkörperung als Messteilung ein Lineargitter und deren zweite Maßverkörperung als Messteilung ein Radialgitter umfasst. In einer alternativen Ausführungsform kann die erste und die zweite Maßverkörperung als Messteilung jeweils ein Lineargitter umfassen, wobei die Lineargitter senkrecht zueinander orientiert sind.

Weitere Vorteile sowie Einzelheiten der vorliegenden Erfindung ergeben sich aus der nachfolgenden Beschreibung von Ausführungsbeispielen anhand der beiliegenden Figuren.

Es zeigt hierbei
- Figur 1: eine schematisierte Teil-Darstellung eines Ausführungsbeispiels der erfindungsgemäßen optischen Positionsmesseinrichtung in einer Draufsicht;
- Figur 2: eine Teilansicht der ersten Maßverkörperung mit einem Ausführungsbeispiel einer ersten Messteilung im Bereich der ersten Referenzmarkierung;
- Figur 3a: eine Teilansicht der zweiten Maßverkörperung mit einem Ausführungsbeispiel einer zweiten Messteilung im Bereich der zweiten Referenzmarkierung;
- Figur 3b: eine Teilansicht eines Ausführungsbeispiels der zweiten Maßverkörperung mit dem Reflektor im Bereich der zweiten Referenzmarkierung;
- Figur 4a, 4b: je eine Schnittansicht mit dem Abtaststrahlengang eines Ausführungsbeispiels der erfindungsgemäßen optischen Positionsmesseinrichtung;
- Figur 5: den entfalteten Abtaststrahlengang des Ausführungsbeispiels der erfindungsgemäßen optischen Positionsmesseinrichtung aus Figur 4a, 4b;
- Figur 6: eine Darstellung zur Erläuterung der Erzeugung des ersten Referenzsignals;
- Figur 7a - 7c, 8a - 8c und 9a - 9c: je eine Darstellung zur Erläuterung der Erzeugung des zweiten Referenzsignals;
- Figur 10: eine Teilansicht einer alternativ ausgebildeten ersten Maßverkörperung mit der ersten Messteilung im Bereich der ersten Markierung.

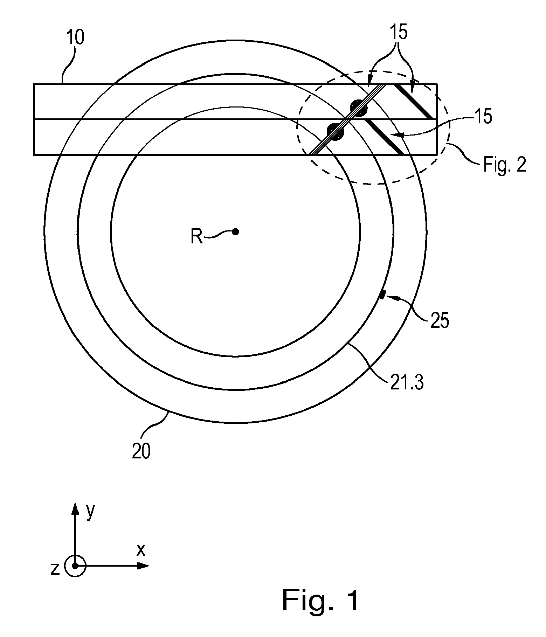

In Figur 1 sind in stark schematisierter Form Komponenten eines Ausführungsbeispiels der erfindungsgemäßen optischen Positionsmesseinrichtung dargestellt. Gezeigt ist dabei eine Messanordnung, wie sie etwa im eingangs erwähnten zweiten Ausführungsbeispiel der US 2012/105862 A1 der Anmelderin bereits grundsätzlich beschrieben ist. Über die nachfolgend erläuterten erfindungsgemäßen Maßnahmen wird diese Messanordnung nunmehr um eine Möglichkeit zur Referenzierung der beiden eingesetzten Maßverkörperungen 10, 20 ergänzt. In der vereinfachten Darstellung der Figur 1 sind hierbei i.w. lediglich diejenigen Elemente der optischen Positionsmesseinrichtung gezeigt, die für die Erläuterung der erfindungsgemäßen Maßnahmen im Zusammenhang mit der Referenzierung nötig sind.

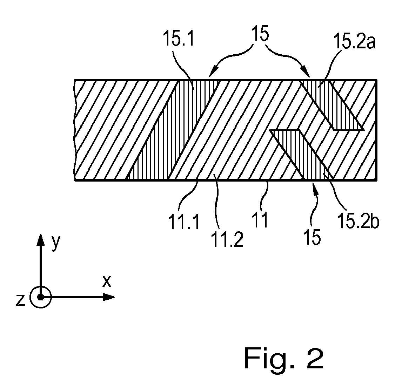

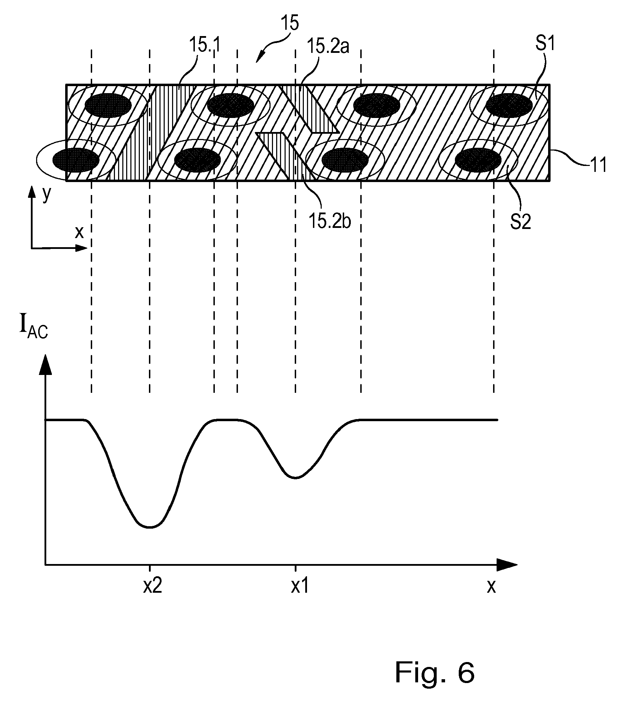

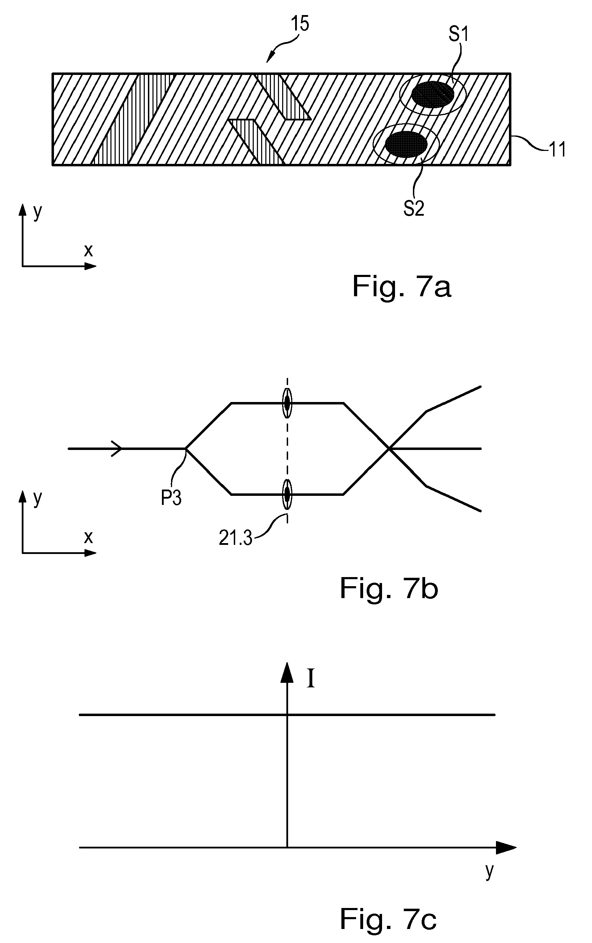

Analog zur Messanordnung gemäß den Figuren 6 und 7 in der erwähnten Druckschrift US 2012/105862 A1 ist im vorliegenden Beispiel die erste Maßverkörperung 10 mit einer ersten Messteilung in einer entsprechenden Maschine entlang einer ersten linearen Messrichtung x beweglich angeordnet. Wie aus der Teilansicht der Messteilung 11 in Figur 2 ersichtlich, ist die erste Messteilung 11 hierbei als Lineargitter in Form eines Auflichtphasengitters ausgebildet. Dieses weist periodisch entlang der ersten Messrichtung x angeordnete Teilungsbereiche 11.1, 11.2 mit unterschiedlichem Phasenhub auf. Die streifenförmigen Teilungsbereiche 11.1, 11.2 stellen im Fall eines verwendeten Phasengitters damit Stege und Lücken desselbigen dar. Selbstverständlich kann die erfindungsgemäße Positionsmesseinrichtung auch alternativ ausgebildete erste Messteilungen umfassen, die periodisch entlang der ersten linearen Messrichtung angeordnete Teilungsbereiche umfassen, beispielsweise Amplitudengitter etc.. In Figur 1 ist aus Übersichtlichkeitsgründen die verwendete erste Messteilung 11 der ersten Maßverkörperung 10 nicht im Detail dargestellt.

Ebenfalls aus diesem Grund ist in Figur 1 eine Lichtquelle sowie eine Detektoranordnung mit mehreren Detektorelementen nicht gezeigt. Gegenüber diesen Komponenten der erfindungsgemäßen optischen Positionsmesseinrichtung ist die erste Maßverkörperung 10 entlang der ersten Messrichtung x beweglich angeordnet.

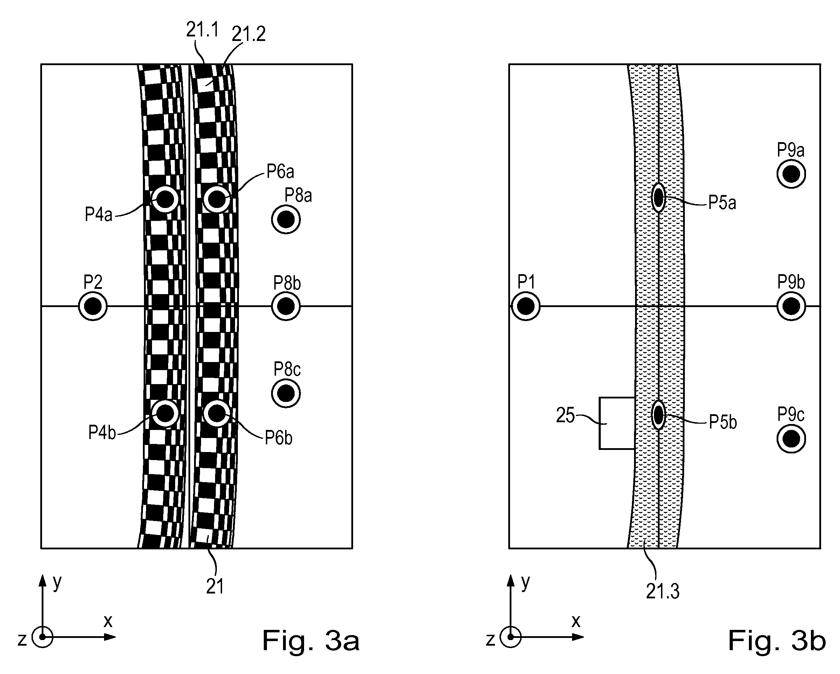

Die erfindungsgemäße optische Positionsmesseinrichtung weist ferner eine zweite Maßverkörperung 20 mit einer zweiten Messteilung 21 auf, die wiederum nicht im Detail in Figur 1 gezeigt ist; Teilansichten der zweiten Maßverkörperung 20 sind in den Figuren 3a, 3b dargestellt. Als zweite Messteilung 21 umfasst die zweite Maßverkörperung 20 im vorliegenden Ausführungsbeispiel eine Kombination aus einem Durchlichtgitter und einem Reflektor 21.3. Das Durchlichtgitter ist dabei auf der Oberseite eines plattenförmigen Trägersubstrats 24 angeordnet, der Reflektor 21.3 auf dessen entgegengesetzter Unterseite, wobei dessen reflektierende Seite in Richtung des Durchlichtgitters orientiert ist.

Die zweite Messteilung 21 ist im vorliegenden Ausführungsbeispiel kreisringförmig ausgebildet, wobei das Durchlichtgitter periodisch entlang der Kreisumfangsrichtung angeordnete Teilungsbereiche 21.1, 21.2 mit unterschiedlichen Transmissionseigenschaften aufweist; hierzu sei etwa auf die Teilansicht der zweiten Messteilung 21 in Figur 3a verwiesen.

Daneben umfasst die zweite Messteilung 21 den kreisringförmigen Reflektor 21.3, der in Figur 3b in einer Draufsicht gezeigt ist. An mindestens einer Position ist senkrecht zur zweiten Messrichtung benachbart zum kreisringförmigen Reflektor 21.3 eine zweite Referenzmarkierung 25 in Form eines reflektierenden Teilbereichs vorgesehen. Das Durchlichtgitter der zweiten Messteilung 21 ist als sog. Radial-Zirkulargitter ausgebildet; das periodisch angeordnete Teilungsbereiche 21.1, 21.2 mit unterschiedlichen Beugungseigenschaften aufweist. Bezüglich Details zu derartigen Radial-Zirkulargittern sei auf die US 2012/105862 A1 der Anmelderin verwiesen.

Die zweite Maßverkörperung 20 ist in der entsprechenden Maschine um eine Rotationsachse R drehbar angeordnet und damit ebenfalls gegenüber der - nicht in Figur 1 gezeigten - Lichtquelle und der Detektoranordnung relativ beweglich. Die Rotationsachse R fällt dabei mit dem Kreiszentrum der kreisringförmigen zweiten Messteilung 21 zusammen. Die Messrichtung der zweiten Maßverkörperung 20 erstreckt sich im vorliegenden Ausführungsbeispiel somit kreisringförmig um die Rotationsachse R, nachfolgend sei diesbezüglich von der zweiten Messrichtung die Rede.

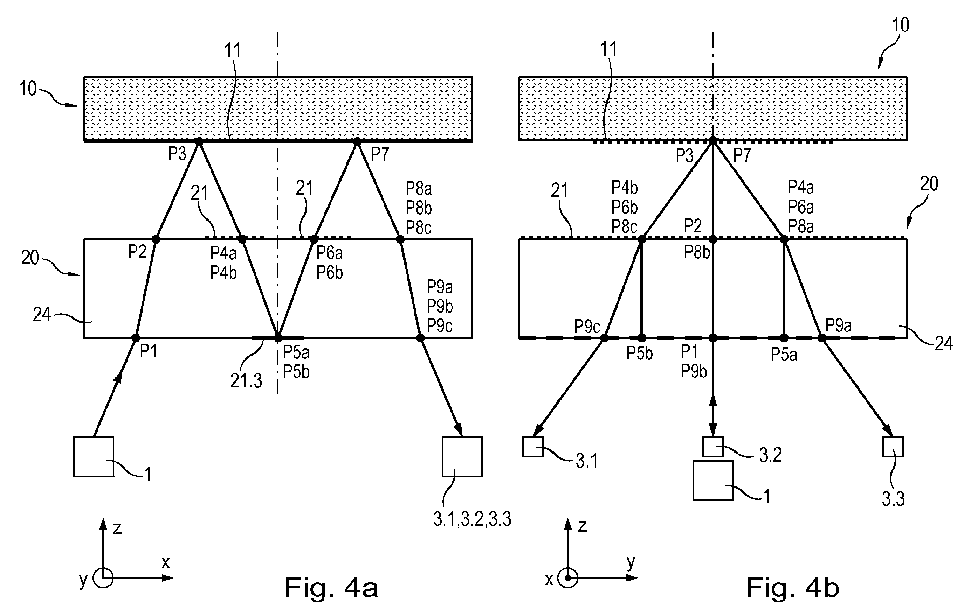

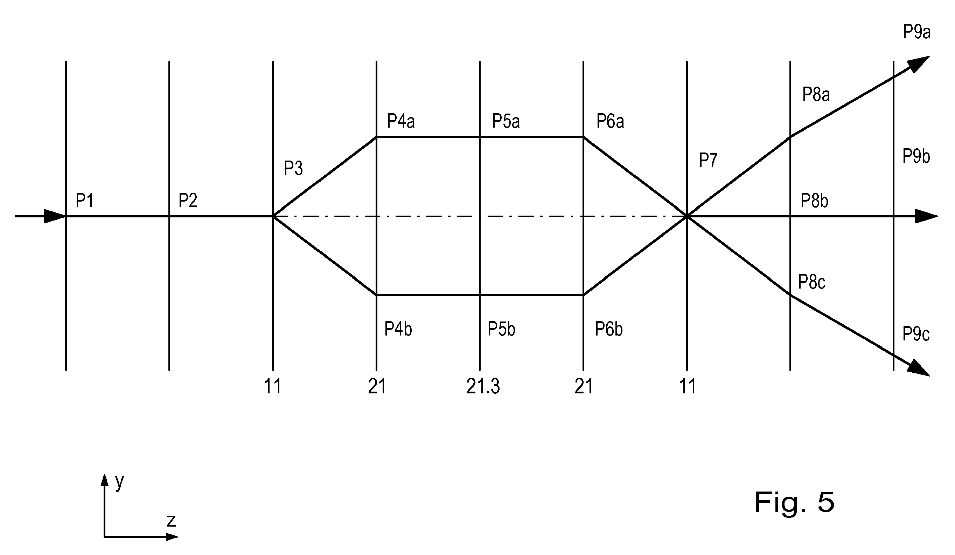

Der grundsätzliche Abtaststrahlengang in der erfindungsgemäßen optischen Positionsmesseinrichtung zur Erzeugung verschiebungsabhängiger Positionssignale bzgl. der Relativpositionen der ersten und zweiten Maßverkörperung 10, 20 sei nachfolgend anhand der Figuren 4a, 4b und 5 erläutert. Die über einen derartigen Abtaststrahlengang erzeugten Positionssignale dienen z.B. in einer - nicht gezeigten - Maschinensteuerung dazu, bestimmte Maschinenkomponenten in definierter Art und Weise zu positionieren. Der zur Erzeugung dieser Positionssignale genutzte Abtaststrahlengang entspricht i.w. dem Strahlengang, welcher aus dem zweiten Ausführungsbeispiel der bereits erwähnten US 2012/105862 A1 bekannt ist. Die Figuren 4a, 4b der vorliegenden Anmeldung zeigen hierbei den Abtaststrahlengang zwischen der Lichtquelle 1 und den Detektorelementen 3.1 - 3.3 der Detektoranordnung in verschiedenen Ansichten, während Figur 5 den entfalteten Abtaststrahlengang darstellt.

Ein von der Lichtquelle 1 emittiertes, kollimiertes Strahlenbündel trifft zunächst am Ort P1 geneigt auf das Trägersubstrat 24 der zweiten Maßverkörperung 20. Das Trägersubstrat 24 transmittiert das Strahlenbündel über den Ort P2, so dass es am Ort P3 auf das Auflichtgitter der ersten Messteilung 11 auftrifft, das es in zwei Teilstrahlenbündel aufspaltet und in y-Richtung ablenkt. Anschließend gelangen die Teilstrahlenbündel am Ort P4a, P4b auf einen ersten Bereich des Durchlichtgitters der zweiten Messteilung 21 auf dem Trägersubstrat 24. Dort erfahren die beiden Teilstrahlenbündel eine Beugung und werden wieder parallel zur z-Richtung gerichtet und in x-Richtung durch eine überlagerte Zylinderlinsenwirkung auf die Orte P5a, P5b auf dem Reflektor 21.3 auf der Unterseite des Trägersubstrats 24 fokussiert. Nach der Reflexion gelangen die Teilstrahlenbündel an den Orten P6a, P6b auf einen zweiten Bereich des Durchlichtgitters der zweiten Messteilung 21 auf dem Trägersubstrat 24, wodurch sie wieder durch eine Zylinderlinsenwirkung in x-Richtung re-kollimiert und durch eine überlagerte Ablenkwirkung entgegengesetzt zu den einfallenden Teilstrahlenbündeln zurückgelenkt werden. Beide Teilstrahlenbündel treffen dadurch auf einen gemeinsamen Punkt P7 auf das Auflichtgitter der ersten Messteilung 11, werden dort überlagert und treten als überlagerte Teilstrahlenbündel über die Orte P8a, P8b, P8c und P9a, P9b, P9c des Trägersubstrats 24 der zweiten Maßverkörperung 20 in resultierender 0. und ±1. Beugungsordnung aus. Die Detektion durch optoelektronische Detektorelemente 3.1, 3.2, 3.2 der Detektoranordnung und die Erzeugung phasenverschobener Positionssignale bzgl. der Relativpositionen der beiden Maßverkörperungen 10, 20 erfolgt anschließend wie etwa im ersten Ausführungsbeispiel der US 2012/105862 A1 erläutert. Alternativ hierzu wäre es auch möglich, die Teilstrahlenbündel in Lichtleitfasern einzukoppeln und zu einer entfernt angeordneten nachgeordneten Auswertelektronik zu übertragen.

Im Folgenden werden nunmehr die einzelnen erfindungsgemäßen Maßnahmen sowie das konkrete Vorgehen zur Referenzierung der beiden Maßverkörperungen 10, 20 der erfindungsgemäßen optischen Positionsmesseinrichtung im Detail erläutert.

Die zur Referenzierung der ersten Maßverkörperung 10 genutzte erste Markierung in Form einer Referenzmarkierung 15 ist in der Teilansicht der ersten Messteilung 11 in Figur 2 gezeigt. Die erste Messteilung 11 ist wie bereits oben erwähnt als Lineargitter ausgebildet, das periodisch entlang der ersten Messrichtung x angeordnete Teilungsbereiche 11.1, 11.2 mit unterschiedlichem Phasenhub aufweist. Im vorliegenden Ausführungsbeispiel ist die Längsachse der rechteckförmigen Teilungsbereiche 11.1, 11.2 der ersten Messteilung 11 schräg gegenüber der ersten Messrichtung x orientiert, d.h. unter einem Winkel ungleich 90°; selbstverständlich können hier auch andere Winkel vorgesehen werden.

Wie aus Figur 2 ersichtlich, besteht die erste Referenzmarkierung 15 im dargestellten Ausführungsbeispiel an der gewählten Referenzposition der ersten Messteilung 11 aus einer ersten Teilmarkierung 15.2a, 15.2b und einer zweiten Teilmarkierung 15.1. Die beiden Teilmarkierungen 15.1, 15.2a, 15.2b bestehen jeweils aus Linienstrukturen, die in die erste Messteilung 11 integriert angeordnet sind und umfassen wie ersichtlich jeweils Lineargitter, deren Teilungsbereiche gegenüber den Teilungsbereichen 11.1, 11.2 der ersten Messteilung 11 verdreht angeordnet sind.

Als grundsätzlich vorteilhaft erweist sich hierbei, wenn - wie im Beispiel gezeigt - die erste Markierung bzw. Referenzmarkierung 15 in einem Bereich der ersten Messteilung 11 angeordnet ist, der für die eigentliche Positionsbestimmung nicht genutzt wird, nämlich an einem Längsende der ersten Messteilung 11.

Die zweite Teilmarkierung 15.1 erstreckt sich im vorliegenden Ausführungsbeispiel schräg über die gesamte Breite der ersten Messteilung 11 und umfasst wie ersichtlich ein Lineargitter, dessen Teilungsbereiche gegenüber den Teilungsbereichen 11.1, 11.2 der ersten Messteilung 11 verdreht angeordnet sind.

Die erste Teilmarkierung 15.2a, 15.2b sieht dagegen zwei identisch ausgebildete Teil-Linienstrukturen vor, die ebenfalls schräg gegenüber der ersten Messteilung 11 angeordnet sind und sich jeweils vom Rand der ersten Messteilung 11 bis etwa in die Mitte der ersten Messteilung 11 erstrecken. Die Teil-Linienstrukturen der ersten Teilmarkierung 15.1, 15.2a, 15.2b sind entlang der ersten Messrichtung x versetzt angeordnet und bestehen wie bereits erwähnt jeweils aus Lineargittern, deren Teilungsbereiche gegenüber den Teilungsbereichen 11.1, 11.2 der ersten Messteilung 11 verdreht angeordnet sind.

Die Teilungsbereiche der Linienstrukturen der zweiten und ersten Teilmarkierungen 15.1 bzw. 15.2a, 15.2b sind in der Messteilungsebene um den gleichen Winkel, aber in entgegengesetzter Richtung gegenüber den Teilungsbereichen 11.1, 11.2 der ersten Messteilung 11 verdreht angeordnet. Über die Lineargitter der Linienstrukturen 15.1, 15.2a, 15.2b resultieren bestimmte optische Wirkungen auf die darauf einfallenden Teilstrahlenbündel, was anhand der nachfolgenden Beschreibung noch näher erläutert wird.

Wenn bei einer derartigen Ausbildung der ersten Referenzmarkierung 15 zum Referenzieren der ersten Maßverkörperung 10 das abtastende Strahlenbündel die zweite oder erste Teilmarkierung 15.1 bzw. 15.2a, 15.2b der ersten Referenzmarkierung 15 am Ort P3 überstreicht, so bewirken die dort unter einem gegenüber der restlichen Messteilung 11 anderen Winkel angeordneten Lineargitter der beiden Teilmarkierungen 15.1 bzw. 15.2a, 15.2b, dass die davon reflektierten Teilstrahlenbündel nicht mehr auf den kreisringförmigen Reflektor 21.3 der zweiten Maßverkörperung 20 auftreffen. Der vorstehend erläuterte Abtaststrahlengang wird auf diese Art und Weise an einer definierten Position entlang der ersten Messrichtung x, z.B. an einer Referenzposition, durch die gewählte Ausbildung der ersten Referenzmarkierung 15 somit definiert gestört. Dies erfolgt, indem eine Ablenkung der darauf einfallenden bzw. reflektierten Strahlenbündel abweichend vom Soll-Abtaststrahlengang über die Lineargitter der zweiten oder ersten Teilmarkierung 15.1, 15.2a, 15.2b bewirkt wird. Ein deutlicher Signaleinbruch der detektierten Signale ist die Folge, welcher dann zur Identifikation der definierten Position bzw. Referenzposition und damit zur Referenzierung der ersten Maßverkörperung 10 genutzt werden kann. Ein erste maßgebliche Funktionalität der ersten Referenzmarkierung 15 besteht somit darin, dass an der entsprechenden definierten Position entlang der ersten Messrichtung, beispielsweise an einer vorgegebenen Referenzposition, ein Signaleinbruch der detektierten Signale resultiert, der im vorliegenden Ausführungsbeispiel zur Referenzierung der ersten Maßverkörperung 10 genutzt werden kann. Das konkrete Vorgehen bei einem derartigen Referenzierungsprozess, das auf diesem Grundprinzip basiert, wird nachfolgend noch näher erläutert.

Um an der definierten Position bzw. Referenzposition während der Referenzierung der ersten Maßverkörperung 10 einen vollständigen Signaleinbruch und damit einen völligen Ausfall der Signale zu vermeiden, erweist sich als vorteilhaft, wenn die Ausdehnung der zweiten und ersten Teilmarkierungen 15.1, 15.2a, 15.2b der ersten Referenzmarkierung 15 kleiner als der Durchmesser der diese Bereiche der Messteilung 11 abtastenden Teilstrahlenbündel gewählt wird, wie dies in Figur 1 angedeutet ist. Es resultieren dann lediglich in der Signalamplitude verringerte Signale.

Nachfolgend sei die konkrete Ausbildung der zur Referenzierung der zweiten Maßverkörperung 20 verwendeten zweiten Referenzmarkierung 25 erläutert. Hierzu sei auf Figur 3b verwiesen, die eine Draufsicht auf den Reflektor 21.3 der zweiten Messteilung 20 zeigt. Wie aus dieser Darstellung erkennbar, besteht die zweite Referenzmarkierung 25 auf Seiten der zweiten Maßverkörperung 20 im dargestellten Ausführungsbeispiel aus einem reflektierenden Teilbereich. An der gewählten Referenzposition entlang der zweiten Messrichtung ist demzufolge der Reflektor 21.3 der zweiten Messteilung 21 auf der Unterseite des Trägersubstrats in einem begrenzten Bereich senkrecht zur zweiten Messrichtung verbreitert.

Aufgrund dieser Ausbildung der zweiten Referenzmarkierung 25 kommt diese lediglich dann im Abtaststrahlengang zu liegen, wenn die Teilstrahlenbündel von der ersten Messteilung 11 in diesen Bereich der zweiten Messteilung 21 abgelenkt werden. Dies ist nur dann der Fall, wenn im vorliegenden Ausführungsbeispiel die Referenzposition der ersten Maßverkörperung 10 angefahren wird und die erste Maßverkörperung 10 in dieser Position verbleibt. Wie vorher erläutert, bewirkt die gewählte Ausbildung der ersten Referenzmarkierung 15 bzw. der zweiten und ersten Teilmarkierung 15.1, 15.2a, 15.2b, dass die davon reflektierten Teilstrahlenbündel dann nicht mehr auf den kreisringförmigen Reflektor 21.3 der zweiten Maßverkörperung 20 abgelenkt werden, sondern in einen zum Reflektor 21.3 in x-Richtung benachbarten Bereich. Dort ist nunmehr die zweite Referenzmarkierung 25 in Form des reflektierenden Teilbereichs angeordnet. Befindet sich demnach die erste Maßverkörperung 10 in der vorgesehenen Referenzposition kann die zweite Maßverkörperung 20 referenziert werden, indem durch Verdrehen der zweiten Maßverkörperung 20 die Teilstrahlenbündel den reflektierenden Teilbereich der zweiten Referenzmarkierung 25 überstreichen und nur an der Referenzposition der zweiten Maßverkörperung 20 ein verändertes Signal mit einem deutlichen Signalanstieg erzeugen. Daraus ist dann ein zweites Referenzsignal zur Referenzierung der zweiten Maßverkörperung 20 erzeugbar. Neben der bereits o.g. maßgeblichen Funktionalität bzgl. des Signaleinbruchs an der ersten Referenzposition weist die erste Markierung bzw. Referenzmarkierung 15 somit als weitere Funktionalität eine Schaltfunktion zum selektiven Aktivieren der zweiten Referenzmarkierung 25 auf. So werden darüber im vorliegenden Ausführungsbeispiel lediglich an der ersten Referenzposition die Abtaststrahlenbündel auf die zweite Referenzmarkierung 25 gelenkt, was beim Überfahren dieser zweiten Referenzmarkierung 25 zu einer erfassbaren Modulation der detektierten Signale führt. Befindet sich demgegenüber die erste Maßverkörperung 10 nicht in der ersten Referenzposition, so wird die zweite Referenzmarkierung 25 nicht von den abtastenden Teilstrahlenbündeln beleuchtet und ein Überfahren der zweiten Referenzmarkierung 25 führt zu keiner Änderung in den detektierten Signalen. Auf diese Art und Weise ist demzufolge die zweite Referenzmarkierung 25 der zweiten Maßverkörperung 20 definiert an- und ausschaltbar, indem nämlich zu Referenzierungszwecken die erste Maßverkörperung 10 in die zugehörige definierte erste Position, beispielsweise in die erste Referenzposition, verfahren wird und im regulären Messbetrieb aus dieser heraus wegverfahren wird. Eine Beeinträchtigung der Signale durch die Referenzmarke 25 der zweiten Maßverkörperung 20 kann damit im Messbetrieb vermieden werden, der gesamte Maßverkörperungsbereich der zweiten Maßverkörperung 20 ist im Messbetrieb über die ganze Messlänge somit uneingeschränkt für die Positionsbestimmung nutzbar.

Abschließend sei anhand der Figuren 6 sowie 7a - 7f beispielhaft das schrittweise Vorgehen zur Referenzierung der ersten und zweiten Maßverkörperung 10, 20 in einem Ausführungsbeispiel der erfindungsgemäßen optischen Positionsmesseinrichtung erläutert.

Zunächst erfolgt hierbei die Referenzierung der ersten Maßverkörperung 10, die anhand der Figur 6 beschrieben wird. Die erste Maßverkörperung 10 wird zur Referenzierung dabei entlang der ersten Messrichtung x verfahren bzw. bewegt, so dass die abtastenden Teilstrahlenbündel S1, S2 über den Bereich der ersten Referenzmarkierung 15 auf der ersten Messteilung 11 streichen.

In Figur 6 sind die die Messteilung 11 abtastenden Teilstrahlenbündel S1, S2 in verschiedenen Positionen während dieser Verfahrbewegung der ersten Messteilung 11 sowie der zugehörige Verlauf des Wechselanteils der detektierten Signale I_{AC} schematisiert dargestellt. Wie oben erläutert, resultiert an den Positionen x1 und x2, an denen die Teilstrahlenbündel S1, S2 im Abtaststrahlengang auf die zweite und erste Teilmarkierung 15.1, 15.2a, 15.2b der ersten Referenzmarkierung 15 treffen, jeweils ein deutlicher Signaleinbruch, der zur Referenzierung der ersten Maßverkörperung genutzt werden kann, da die Position der Teilmarkierungen 15.1, 15.2a, 15.2b auf der ersten Messteilung 11 bekannt ist. Im dargestellten Ausführungsbeispiel sind auf diese Art und Weise an den Positionen x1 und x2 demzufolge zwei erste Referenzsignale erzeugbar, die zur Referenzierung der ersten Maßverkörperung genutzt werden können. Neben der Referenzierung entlang der x-Achse kann hierbei auch eine Referenzierung der ersten Maßverkörperung entlang der hierzu senkrechten y-Achse erfolgen, da die y-Position der Teilmarkierungen 15.1, 15.2a, 15.2b auf der Messteilung 11 ebenfalls bekannt ist. Dies ist der Fall, da die Teilmarkierungen 15.1, 15.2a, 15.2b zueinander geneigt angeordnet sind und der Abstand des Signaleinbruchs in der x-Richtung somit automatisch die Position der Teilstrahlenbündel entlang der y-Richtung auf der ersten Messteilung 11 definiert.

Nach der Referenzierung der ersten Maßverkörperung folgt anschließend die Referenzierung der zweiten Maßverkörperung, die anhand der Figuren 7a - 7c, 8a - 8c und 9a - 9c erläutert wird.

Figur 7a zeigt dabei wieder eine Draufsicht auf die erste Messteilung 11 im Bereich der Referenzmarkierung 15. Die beiden abtastenden Teilstrahlenbündel S1, S2 befinden sich in dieser Position der ersten Messteilung 11 entlang der ersten Messrichtung x noch außerhalb des Bereichs mit der Referenzmarkierung 15. Die Signalerzeugung verläuft in dieser Phase deshalb noch ungestört. Wie aus der Darstellung des - gegenüber Figur 3 vereinfachten - aufgefalteten Abtaststrahlengangs ersichtlich ist, treffen in dieser Position der ersten Messteilung 11 die am Ort P3 der ersten Messteilung 11 aufgespaltenen Teilstrahlenbündel genau auf den Reflektor 21.3 der zweiten Messteilung.

Wird in dieser Stellung der ersten Maßverkörperung 10 bzw. Messteilung 11 die zweite Maßverkörperung um die Rotationsachse verdreht, so resultiert der in Figur 7c dargestellte Verlauf der detektierten Signale. Sowohl der Gleichlichtanteil der detektierten Signale als auch der modulierende Anteil der detektierten Signale bleibt unverändert. Es resultiert demnach noch keine Veränderung in den detektierten Signalen, wenn die zweite Maßverkörperung 10 sich entlang der zugehörigen zweiten Messrichtung bewegt.

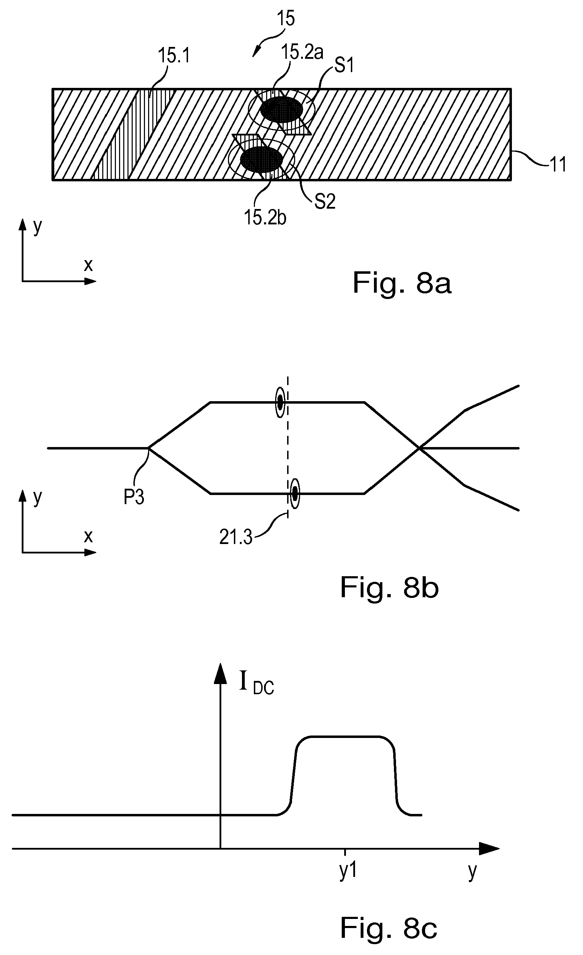

Figur 8a zeigt nunmehr einen Zustand, in dem die erste Messteilung 11 entlang der ersten Messrichtung x soweit verschoben wurde, dass die beiden abtastenden Strahlenbündel S1, S2 auf der Messteilung 11 den Bereich der rechts gelegenen ersten Teilmarkierungen 15.2a, 15.2b der ersten Referenzmarkierung 15 beaufschlagen. Wie aus der Darstellung des aufgefalteten Abtaststrahlengangs in Figur 8b ersichtlich, treffen in dieser Position der ersten Messteilung 11 die am Ort P3 der ersten Messteilung 11 aufgespaltenen Teilstrahlenbündel nun nicht mehr auf den Reflektor 21.3 der zweiten Messteilung auf, sondern demgegenüber entlang der ersten Messrichtung x versetzt.

Wird in dieser Stellung der ersten Maßverkörperung 10 bzw. Messteilung 11 die zweite Maßverkörperung wieder um die Rotationsachse verdreht, so resultiert der in Figur 8c dargestellte Verlauf des Gleichlichtanteils der detektierten Signale I_{DC}. Wie ersichtlich, ergibt sich an derjenigen Position y1 entlang der zweiten Messrichtung y eine Signalerhöhung, an der die zweite Referenzmarkierung bzw. der entsprechende reflektierende Bereich angeordnet ist.

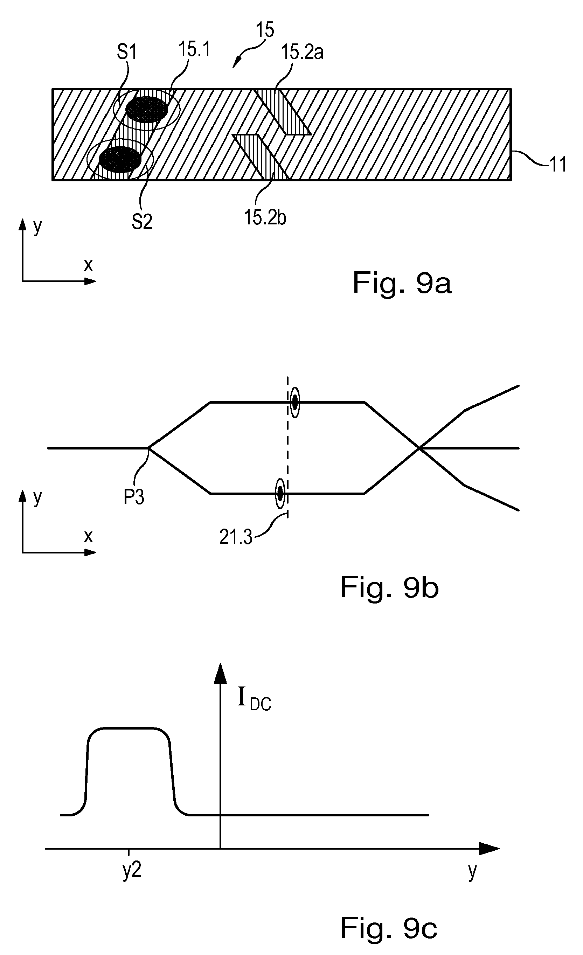

Analog hierzu erfolgt die Signalbeeinflussung auch in dem Zustand, der in Figur 9a gezeigt ist. Hier wurde die erste Messteilung nochmals weiter entlang der ersten Messrichtung x verschoben, so dass die beiden abtastenden Strahlenbündel S1, S2 auf der Messteilung 11 den Bereich der linken, zweiten Teilmarkierung 15.1 der ersten Referenzmarkierung 15 beaufschlagen. Wie wiederum aus der Darstellung des aufgefalteten Abtaststrahlengangs in Figur 9b ersichtlich, treffen in dieser Position der ersten Messteilung 11 die am Ort P3 der ersten Messteilung 11 aufgespaltenen Teilstrahlenbündel nicht mehr auf den Reflektor 21.3 der zweiten Messteilung auf, sondern entlang der ersten Messrichtung x etwas versetzt.

Wird in dieser Stellung der ersten Maßverkörperung 10 bzw. Messteilung 11 die zweite Maßverkörperung erneut um die Rotationsachse verdreht, so ergibt sich der in Figur 9c dargestellte Verlauf des Gleichlichtanteils der detektierten Signale I_{DC}. Es resultiert an der Position y2 entlang der zweiten Messrichtung y eine Signalerhöhung, an der die zweite Referenzmarkierung bzw. der entsprechende reflektierende Bereich angeordnet ist.

Aus der bekannten Lage der zweiten Referenzmarkierung auf der zweiten Maßverkörperung und den ermittelten Positionen y1, y2, an denen beim beschriebenen Vorgehen eine Signalerhöhung resultiert, kann sodann die gewünschte Referenzierung auch der zweiten Maßverkörperung vorgenommen werden. Hierbei kann aus der Lage der ersten Signalerhöhung ein Drehwinkel der zweiten Maßverkörperung bestimmt werden; aus dem Abstand der beiden Signalerhöhungen lässt sich die Position der zweiten Maßverkörperung entlang der z-Richtung bestimmen.

Neben dem erläuterten Ausführungsbeispiel sind selbstverständlich noch andere Ausführungsmöglichkeiten im Rahmen der vorliegenden Erfindung realisierbar.

So kann etwa in einer weiteren Ausführungsform der erfindungsgemäßen optischen Positionsmesseinrichtung vorgesehen sein, dass die erste Markierung auf der ersten Maßverkörperung nicht als Referenzmarkierung für diese Maßverkörperung fungiert, d.h. nicht zum Referenzieren der ersten Maßverkörperung dient, sondern i.w. nur die Schaltfunktion zum selektiven Aktivieren der zweiten Referenzmarkierung besitzt. Hierzu wäre eine räumlich begrenzte erste Markierung an mindestens einer definierten Position entlang der ersten Messrichtung anzuordnen; besonders geeignet hierzu wäre etwa wieder eine Position an einem Längsende der ersten Messteilung.

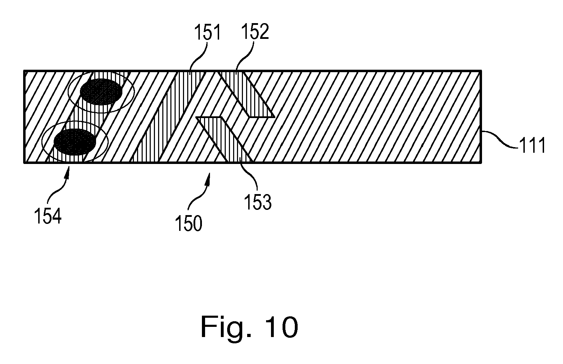

Eine weitere mögliche Ausführungsform einer geeigneten ersten Markierung 150 ist in Figur 10 dargestellt, die analog zur Figur 2 einen Teil der ersten Messteilung 111 zeigt. Die hier verwendete erste Markierung 150 besteht wiederum aus zwei Teilmarkierungen 154 sowie 151 - 153. Die erste Teilmarkierung 151 - 153 umfasst im dargestellten Ausführungsbeispiel mehrere Absorberbereiche, die in die erste Messteilung 111 integriert angeordnet sind. Von diesen Absorberbereichen der ersten Teilmarkierung 151 - 153 werden die darauf einfallenden Teilstrahlenbündel lediglich gering oder nicht reflektiert. Die zweite Teilmarkierung 154 ist analog zur zweiten Teilmarkierung 15.1 aus Figur 2 ausgebildet und besteht aus einem in diesem Bereich verdreht gegenüber der ersten Messteilung 111 angeordneten Lineargitter. Die Absorberbereiche der ersten Teilmarkierung 151 - 153 weisen keine derartige Substruktur auf.

Zur Referenzierung der ersten Messteilung 111 bzw. zur Erzeugung eines Signaleinbruchs der detektierten Signale an einer definierten Position entlang der ersten Messrichtung dienen in dieser Ausführungsform nunmehr lediglich die Absorberbereiche der ersten Teilmarkierung 151 - 153.

Im Bereich der zweiten Teilmarkierung 154 werden die darauf einfallenden Teilstrahlenbündel durch das dort vorgesehene Lineargitter wiederum definiert abgelenkt, d.h. die zweite Teilmarkierung 154 weist eine Schaltfunktion zum selektiven Aktivieren der zweiten Referenzmarkierung auf der zweiten Maßverkörperung auf. Für die beiden maßgeblichen Funktionen der ersten Referenzmarkierung 150 sind in dieser Variante im Gegensatz zur oben erläuterten Ausführungsform demzufolge getrennte Elemente vorgesehen, nämlich einerseits die zweite Teilmarkierung 154 sowie andererseits die erste Teilmarkierung 151 - 153. Die verschiedenen Teilmarkierungen bzw. Strukturen auf der ersten Maßverkörperung dienen somit zum einen zum Schalten bzw. Aktivieren der zweiten Referenzmarkierung auf der zweiten Maßverkörperung sowie zum anderen zum Referenzieren der ersten Maßverkörperung.

Anstelle der in dieser Variante vorgesehenen Absorberbereiche für die erste Teilmarkierung könnten selbstverständlich auch weitere alternativ ausgebildete Strukturen zum Einsatz kommen, die die detektierten Signale in Bezug auf deren Phasenlage oder aber in ihrer Amplitude verändern.

Auch in Bezug auf die zweite Referenzmarkierung auf der zweiten Maßverkörperung gibt es im Rahmen der vorliegenden Erfindung weitere Ausführungsmöglichkeiten. So kann etwa vorgesehen werden, dass zusätzlich zu der in Figur 3b lediglich auf einer Seite des Reflektors 21.3 vorgesehenen Referenzmarkierung 25 auf der gegenüberliegenden Seite des Reflektors 21.3 ein zweiter derartiger reflektierender Teilbereich angeordnet wird. Die zweite Referenzmarkierung umfasst dann zwei spiegelsymmetrisch zum Reflektor 21.3 angeordnete, reflektierende Teilbereiche.

Ferner ist es möglich, dass entlang der Messrichtung der zweiten Maßverkörperung mehrere zweite Referenzmarkierungen abstandscodiert angeordnet werden, d.h. mit definiert unterschiedlichen Abständen entlang der Messrichtung. Darüber ist es möglich, einen absoluten Positionsbezug bei der Inkremental-Messung entlang der zweiten Messrichtung herzustellen, ohne dass die zweite Maßverkörperung im ungünstigsten Fall um eine Komplett-Umdrehung bewegt werden muss.

Desweiteren kann die vorliegende Erfindung nicht nur in Verbindung mit einer linearen ersten Maßverkörperung und einer kreisringförmigen zweiten Maßverkörperung eingesetzt werden. Es ist vielmehr auch möglich, dass in einer alternativen Ausführungsform die erste und die zweite Maßverkörperung als Messteilung jeweils ein Lineargitter umfassen, wobei die Lineargitter senkrecht zueinander orientiert und unabhängig voneinander bewegbar sind.

Ferner ist die erläuterte Ausbildung der ersten Messteilung als lineares Auflichtgitter nicht zwingend. So wäre etwa alternativ zu den oben erläuterten Ausführungsbeispielen auch möglich, dass die erste Messteilung als Durchlichtgitter ausgebildet wird etc..

## Patentansprüche

1. Optische Positionsmesseinrichtung mit
- einer ersten Maßverkörperung (10), die eine erste Messteilung (11; 111) aufweist, welche entlang einer ersten Messrichtung (x) beweglich angeordnet ist, wobei die erste Maßverkörperung (10) an mindestens einer definierten Position entlang der ersten Messrichtung (x) eine räumlich begrenzte erste Markierung (15; 150) aufweist, die sich von der ersten Messteilung (11; 111) unterscheidet und
- einer zweiten Maßverkörperung (20), die eine zweite Messteilung (21) aufweist, welche entlang einer zweiten Messrichtung beweglich angeordnet ist, wobei die zweite Maßverkörperung (20) an mindestens einer Position eine zweite Referenzmarkierung (25) aufweist, die nur dann zur Erzeugung mindestens eines zweiten Referenzsignals an einer Referenzposition der zweiten Maßverkörperung (20) nutzbar ist, wenn sich die erste Maßverkörperung (10) in derjenigen definierten Position entlang der ersten Messrichtung (x) befindet, die durch die erste Markierung (15; 150) vorgegeben ist.

2. Optische Positionsmesseinrichtung nach Anspruch 1, wobei
- die erste Maßverkörperung (10) als erste Messteilung (11; 111) ein Lineargitter umfasst, das periodisch entlang einer ersten linearen Messrichtung (x) angeordnete Teilungsbereiche (11.1, 11.2) aufweist und
- die zweite Maßverkörperung (20) als zweite Messteilung (21) ein kreisringförmiges Gitter umfasst, das periodisch entlang der Kreisumfangsrichtung angeordnete Teilungsbereiche (21.1, 21.2) aufweist und um eine Rotationsachse (R) drehbar angeordnet ist, so dass sich die zweite Messrichtung entlang des Kreisumfangs erstreckt.

3. Optische Positionsmesseinrichtung nach Anspruch 1, wobei
- die erste Maßverkörperung als erste Messteilung ein Lineargitter umfasst, das periodisch entlang einer ersten linearen Messrichtung angeordnete Teilungsbereiche aufweist und
- die zweite Maßverkörperung als zweite Messteilung ein weiteres Lineargitter umfasst, das periodisch entlang einer zweiten linearen Messrichtung angeordnete Teilungsbereiche umfasst, wobei die zweite Messrichtung senkrecht zur ersten Messrichtung orientiert ist.

4. Optische Positionsmesseinrichtung nach mindestens einem der vorhergehenden Ansprüche, wobei
- die erste Messteilung (11; 111) als Auflichtphasengitter ausgebildet ist, das periodisch angeordnete Teilungsbereiche (11.1, 11.2) mit unterschiedlichem Phasenhub aufweist und
- die zweite Maßverkörperung (20) als zweite Messteilung (21) mindestens ein Durchlichtgitter und einen Reflektor (21.3) umfasst und wobei sich das Durchlichtgitter und der Reflektor (21.3) entlang der zweiten Messrichtung erstrecken.

5. Optische Positionsmesseinrichtung nach Anspruch 4, wobei das Durchlichtgitter als kombiniertes Radial-Zirkulargitter ausgebildet ist, das periodisch angeordnete Teilungsbereiche (21.1, 21.2) mit unterschiedlichen Beugungseigenschaften aufweist.

6. Optische Positionsmesseinrichtung nach mindestens einem der vorhergehenden Ansprüche, wobei die erste Markierung (15; 150) derart ausgebildet ist, dass darüber ein Signaleinbruch der detektierten Signale an der mindestens einen definierten Position entlang der ersten Messrichtung (x) und eine Schaltfunktion zum selektiven Aktivieren der zweiten Referenzmarkierung (25) resultiert.

7. Optische Positionsmesseinrichtung nach Anspruch 6, wobei die erste Markierung (15; 150) mindestens eine erste und eine zweite Teilmarkierung (15.1, 15.2a, 15.2b; 154, 151, 152, 153) umfasst.

8. Optische Positionsmesseinrichtung nach Anspruch 7, wobei die erste Teilmarkierung (15.2a, 15.2b; 151, 152, 153) entweder
- mindestens einen Absorberbereich umfasst, der in die erste Messteilung (111) integriert angeordnet ist und darauf einfallende Teilstrahlenbündel lediglich gering oder nicht reflektiert oder
- mindestens eine Linienstruktur umfasst, die in die erste Messteilung (11) integriert angeordnet ist und die Linienstruktur ein Lineargitter aufweist, dessen Teilungsbereiche gegenüber den Teilungsbereichen (11.1, 11.2) der ersten Messteilung (11) verdreht angeordnet sind.

9. Optische Positionsmesseinrichtung nach Anspruch 7, wobei die zweite Teilmarkierung (15.1; 154) mindestens eine Linienstruktur umfasst, die in die erste Messteilung (11; 111) integriert angeordnet ist und die Linienstruktur ein Lineargitter aufweist, dessen Teilungsbereiche gegenüber den Teilungsbereichen (11.1, 11.2) der ersten Messteilung (11; 111) verdreht angeordnet sind.

10. Optische Positionsmesseinrichtung nach Anspruch 6, wobei die erste Markierung (15; 150) an einem Längsende der ersten Messteilung (11; 111) angeordnet ist.

11. Optische Positionsmesseinrichtung nach Anspruch 7, wobei die erste und zweite Teilmarkierung (15.1, 15.2a, 15.2b; 154, 151, 152, 153) jeweils eine Ausdehnung besitzen, die kleiner als der Durchmesser des Teilstrahlenbündels ist, welches diese abtastet.

12. Optische Positionsmesseinrichtung nach mindestens einem der Ansprüche 6 - 11, wobei die erste Markierung (15) als Referenzmarkierung ausgebildet ist und zur Erzeugung mindestens eines ersten Referenzsignals an einer Referenzposition der ersten Maßverkörperung (11) dient und nur dann ein zweites Referenzsignal erzeugbar ist, wenn sich die erste Maßverkörperung (10) in deren Referenzposition befindet.

13. Optische Positionsmesseinrichtung nach mindestens einem der vorhergehenden Ansprüche, wobei die zweite Referenzmarkierung (25) derart ausgebildet ist, dass diese nur dann von mindestens einem abtastenden Teilstrahlenbündel beaufschlagbar ist, wenn sich die erste Maßverkörperung (10) in derjenigen definierten Position entlang der ersten Messrichtung (x) befindet, die durch die erste Markierung (15; 150) vorgegeben ist.

14. Optische Positionsmesseinrichtung nach Anspruch 13, wobei die zweite Referenzmarkierung (25) als mindestens ein reflektierender Referenzbereich ausgebildet ist, der an der Referenzposition der zweiten Maßverkörperung (20) senkrecht zur zweiten Messrichtung benachbart zum Reflektor (21.3) der zweiten Messteilung (21) angeordnet ist.

15. Optische Positionsmesseinrichtung nach mindestens einem der vorhergehenden Ansprüche mit
- einer Lichtquelle (1) und
- einer Detektoranordnung mit mehreren Detektorelementen (3.1, 3.2, 3.3), wobei
- ein von der Lichtquelle (1) her einfallendes Strahlenbündel an der ersten Messteilung (11; 111) eine Aufspaltung in zwei Teilstrahlenbündel erfährt,
- die Teilstrahlenbündel in Richtung des Durchlichtgitters der zweiten Messteilung (21) propagieren und dort eine Beugung erfahren,
- die gebeugten Teilstrahlenbündel in Richtung des Reflektors (21.3) der zweiten Messteilung (21) propagieren und dort eine Rückreflexion in Richtung des Durchlichtgitters der zweiten Messteilung (21) erfahren,
- die Teilstrahlenbündel in Richtung des Durchlichtgitters der zweiten Messteilung (21) propagieren und dort eine erneute Beugung erfahren,
- die gebeugten Teilstrahlenbündel in Richtung der ersten Messteilung (11; 111) propagieren, wo eine Überlagerung der Teilstrahlenbündel resultiert und
- die überlagerten Teilstrahlenbündel in Richtung der Detektorelemente (3.1, 3.2, 3.3) der Detektoranordnung propagieren, so dass
- aus der optischen Abtastung der beiden Maßverkörperungen (10, 20) Positionssignale bzgl. der Relativposition der beiden Maßverkörperungen (10, 20) erzeugbar sind.

## Claims

1. Optical position-measuring device, comprising
- a first measurement standard (10), which has a first measuring graduation (11; 111), which is movably arranged along a first measurement direction (x), wherein the first measurement standard (10) has a spatially restricted first marking (15; 150) at at least one defined position along the first measurement direction (x), said first marking differing from the first measuring graduation (11; 111), and
- a second measurement standard (20), which has a second measuring graduation (21), which is movably arranged along a second measurement direction, wherein the second measurement standard (20) has a second reference marking (25) at at least one position, said second reference marking only being usable for generating at least one second reference signal at a reference position of the second measurement standard (20) when the first measurement standard (10) is situated in that defined position along the first measurement direction (x) which is predetermined by the first marking (15; 150).

2. Optical position-measuring device according to Claim 1, wherein
- the first measurement standard (10) comprises a linear grating as first measuring graduation (11; 111), said linear grating having graduation regions (11.1, 11.2) arranged periodically along a first linear measurement direction (x), and
- the second measurement standard (20) comprises a circular-ring-shaped grating as second measuring graduation (21), said circular-ring-shaped grating having graduation regions (21.1, 21.2) arranged periodically around the circle circumference direction and being rotatably arranged about an axis of rotation (R) such that the second measurement direction extends along the circle circumference.

3. Optical position-measuring device according to Claim 1, wherein
- the first measurement standard comprises a linear grating as first measuring graduation, said linear grating having graduation regions arranged periodically along a first linear measurement direction, and
- the second measurement standard comprises a further linear grating as second measuring graduation, said linear grating comprising graduation regions arranged periodically along a second linear measurement direction, wherein the second measurement direction is oriented perpendicular to the first measurement direction.

4. Optical position-measuring device according to at least one of the preceding claims, wherein
- the first measuring graduation (11; 111) is embodied as an incident-light phase grating, which has periodically arranged graduation regions (11.1, 11.2) with different phase deviations and
- the second measurement standard (20) comprises at least one transmitted-light grating and a reflector (21.3) as second measuring graduation (21) and wherein the transmitted-light grating and the reflector (21.3) extend along the second measurement direction.

5. Optical position-measuring device according to Claim 4, wherein the transmitted-light grating is embodied as a combined radial-circular grating, which has periodically arranged graduation regions (21.1, 21.2) with different diffraction properties.

6. Optical position-measuring device according to at least one of the preceding claims, wherein the first marking (15; 150) is embodied in such a way that it results in a signal collapse of the detected signals at the at least one defined position along the first measurement direction (x) and in a switching function for selective activation of the second reference marking (25).

7. Optical position-measuring device according to Claim 6, wherein the first marking (15; 150) comprises at least a first and a second division marking (15.1, 15.2a, 15.2b; 154, 151, 152, 153).

8. Optical position-measuring device according to Claim 7, wherein the first division marking (15.2a, 15.2b; 151, 152, 153) either
- comprises at least one absorber region which is arranged integrated into the first measuring graduation (111) and only hardly reflects sub-beams incident thereon or does not reflect these at all, or
- comprises at least one line structure which is arranged integrated into the first measuring graduation (11) and the line structure has a linear grating, the graduation regions of which are arranged rotated in relation to the graduation regions (11.1, 11.2) of the first measuring graduation (11).

9. Optical position-measuring device according to Claim 7, wherein the second division marking (15.1; 154) comprises at least one line structure which is arranged integrated into the first measuring graduation (11; 111) and the line structure has a linear grating, the graduation regions of which are arranged rotated in relation to the graduation regions (11.1, 11.2) of the first measuring graduation (11; 111).

10. Optical position-measuring device according to Claim 6, wherein the first marking (15; 150) is arranged at a longitudinal end of the first measuring graduation (11; 111).

11. Optical position-measuring device according to Claim 7, wherein the first and second division marking (15.1, 15.2a, 15.2b; 154, 151, 152, 153) each have an extent that is smaller than the diameter of the sub-beam scanning the former.

12. Optical position-measuring device according to at least one of Claims 6-11, wherein the first marking (15) is embodied as a reference marking and it serves to generate at least one first reference signal at a reference position of the first measurement standard (11), and a second reference signal is only generable if the first measurement standard (10) is situated in the reference position thereof.

13. Optical position-measuring device according to at least one of the preceding claims, wherein the second reference marking (25) is embodied in such a way that at least one scanning sub-beam is only impingeable thereon if the first measurement standard (10) is situated at that defined position along the first measurement direction (x) which is predetermined by the first marking (15; 150).

14. Optical position-measuring device according to Claim 13, wherein the second reference marking (25) is embodied as at least one reflecting reference region, which is arranged at the reference position of the second measurement standard (20) in a manner perpendicular to the second measurement direction and adjacent to the reflector (21.3) of the second measuring graduation (21).

15. Optical position-measuring device according to at least one of the preceding claims, comprising
- a light source (1) and
- a detector arrangement with a plurality of detector elements (3.1, 3.2, 3.3), wherein
- a beam from the light source (1) incident at the first measuring graduation (11; 111) experiences splitting into two sub-beams,
- the sub-beams propagate in the direction of the transmitted-light grating of the second measuring graduation (21) and experience diffraction there,
- the diffracted sub-beams propagate in the direction of the reflector (21.3) of the second measuring graduation (21) and experience a return reflection in the direction of the transmitted-light grating of the second measuring graduation (21) there,
- the sub-beams propagate in the direction of the transmitted-light grating of the second measuring graduation (21) and experience renewed diffraction there,
- the diffracted sub-beams propagate in the direction of the first measuring graduation (11; 111), where there is a superposition of the sub-beams, and
- the superposed sub-beams propagate in the direction of the detector elements (3.1, 3.2, 3.3) of the detector arrangement such that
- position signals in respect of the relative position of the two measurement standards (10, 20) are generable from the optical scanning of the two measurement standards (10, 20).

## Revendications

1. Dispositif de mesure optique de position comportant
- un premier étalon de mesure (10) qui comporte une première graduation de mesure (11 ; 111) disposée de manière mobile le long d'une première direction de mesure (x), dans lequel le premier étalon de mesure (10) présente, à au moins une position définie le long de la première direction de mesure (x), un premier marquage (15 ; 150) délimité spatialement qui est différent de la première graduation de mesure (11 ; 111), et
- un deuxième étalon de mesure (20) qui comporte une deuxième graduation de mesure (21) disposée de manière mobile le long d'une deuxième direction de mesure, dans lequel le deuxième étalon de mesure (20) présente, à au moins une position, un deuxième marquage de référence (25) qui n'est utilisable pour générer au moins un deuxième signal de référence à une position de référence du deuxième étalon de mesure (20) que lorsque le premier étalon de mesure (10) se trouve à la position définie le long de la première direction de mesure (x) qui est prédéterminée par le premier marquage (15 ; 150).

2. Dispositif de mesure optique de position selon la revendication 1, dans lequel
- le premier étalon de mesure (10) comprend, en tant que première graduation de mesure (11 ; 111), un réseau linéaire qui présente des régions de graduation (11.1, 11.2) disposées périodiquement le long d'une première direction de mesure linéaire (x), et
- le deuxième étalon de mesure (20) comprend, en tant que deuxième graduation de mesure (21), un réseau circulaire qui présente des régions de graduation (21.1, 21.2) disposées périodiquement le long d'une direction circonférentielle et qui est disposée de manière rotative autour d'un axe de rotation (R) de manière à ce que la deuxième direction de mesure s'étende le long de la circonférence.

3. Dispositif de mesure optique de position selon la revendication 1, dans lequel
- le premier étalon de mesure comprend un réseau linéaire en tant que première graduation de mesure, qui présente des régions de graduation disposées périodiquement le long d'une première direction de mesure linéaire, et
- le deuxième étalon de mesure comprend des régions de graduation disposées périodiquement le long d'une deuxième direction de mesure linéaire, dans lequel la deuxième direction de mesure est orientée perpendiculairement à la première direction de mesure.

4. Dispositif de mesure optique de position selon au moins l'une des revendications précédentes, dans lequel
- la première graduation de mesure (11 ; 111) est réalisée sous la forme d'un réseau phasé de réflexion qui présente des régions de graduation (11.1, 11.2) disposées périodiquement ayant des déphasages différents, et
- le deuxième étalon de mesure (20) comprend au moins un réseau transparent et un réflecteur (21.3) en tant que deuxième graduation de mesure (21) et dans lequel le réseau transparent et les deux réflecteurs (21.3) s'étendent le long de la deuxième direction de mesure.

5. Dispositif de mesure optique de position selon la revendication 4, dans lequel le réseau transparent est réalisé sous la forme d'un réseau radial-circulaire qui présente des régions de graduation (21.1, 21.2) disposées périodiquement ayant des propriétés de réfraction différentes.

6. Dispositif de mesure optique de position selon au moins l'une des revendications précédentes, dans lequel le premier marquage (15 ; 150) est réalisé de manière à ce qu'il se produise en outre une décomposition de signal des signaux détectés à ladite au moins une position définie le long de la première direction de mesure (x) et une fonction de commutation permettant d'activer sélectivement le deuxième marquage de référence (25).

7. Dispositif de mesure optique de position selon la revendication 6, dans lequel le premier marquage (15 ; 150) comprend au moins un premier et un deuxième marquage partiel (15.1, 15.2a, 15.2b ; 154, 151, 152, 153).

8. Dispositif de mesure optique de position selon la revendication 7, dans lequel le premier marquage partiel (15.2a, 15.2b ; 151, 152, 153) comprend soit
- au moins une région absorbante qui est disposée de manière intégrée à la première graduation de mesure (111) et qui ne réfléchit que faiblement ou de manière nulle des faisceaux de rayons partiels incidents sur celle-ci, soit
- au moins une structure de lignes qui est disposée de manière intégrée à la première graduation de mesure (11) et la structure de lignes présente un réseau linéaire dont les régions de graduation sont disposées de manière tournée par rapport aux régions partielles (11.1, 11.2) de la première graduation (11).

9. Dispositif de mesure optique de position selon la revendication 7, dans lequel le deuxième marquage partiel (15.1 ; 154) comprend au moins une structure de lignes qui est disposée de manière intégrée à la première graduation de mesure (11 ; 111) et la structure de lignes comporte un réseau linéaire dont les régions de graduation sont disposées de manière tournée par rapport aux régions de graduation (11.1, 11.2) de la première graduation de mesure (11 ; 111).

10. Dispositif de mesure optique de position selon la revendication 6, dans lequel le premier marquage (15 ; 150) est disposé sur une extrémité longitudinale de la première graduation de mesure (11 ; 111).

11. Dispositif de mesure optique de position selon la revendication 7, dans lequel les première et deuxième graduations de mesure (15.1, 15.2a, 15.2b ; 154, 151, 152, 153) possèdent chacune un allongement qui est inférieur au diamètre du faisceau de rayons partiels qui balayent ces dernières.

12. Dispositif de mesure optique de position selon au moins l'une des revendications 6 - 11, dans lequel le premier marquage (15) est réalisé en tant que marquage de référence et est utilisé pour générer au moins un premier signal de référence à une position de référence du premier étalon de mesure (11) et un deuxième signal de référence ne peut être généré que lorsque le premier étalon de mesure (10) se trouve à sa position de référence.

13. Dispositif de mesure optique de position selon au moins l'une des revendications précédentes, dans lequel le deuxième marquage de référence (25) est réalisé de manière à ce qu'elle puisse n'être exposée à au moins un faisceau de rayons partiels effectuant un balayage que lorsque le premier étalon de mesure (10) se trouve à la position définie, le long de la première direction de mesure (x), qui est prédéterminée par le premier marquage (15 ; 150).

14. Dispositif de mesure optique de position selon la revendication 13, dans lequel le deuxième marquage de référence (25) est réalisé sous la forme d'au moins une région de référence réfléchissante qui est disposée à la position de référence du deuxième étalon de mesure (20) perpendiculairement à la deuxième direction de mesure de manière adjacente au réflecteur (21.3) de la deuxième graduation de mesure (21).

15. Dispositif de mesure optique de position selon au moins l'une des revendications précédentes, comportant
- une source de lumière (1) et
- un système détecteur comportant plusieurs éléments détecteurs (3.1, 3.2, 3.3), dans lequel
- un faisceau de rayons incident en provenance de la source de lumière (1) sur la première graduation de mesure (11 ; 111) subit une division en deux faisceaux de rayons partiels,
- les faisceaux de rayons partiels se propagent dans la direction du réseau transparent de la deuxième graduation de mesure (21) est y subissent une réfraction,
- les faisceaux de rayons partiels réfractés se propagent dans la direction du réflecteur (21.3) de la deuxième graduation de mesure (21) et y subissent une rétro-réflexion dans la direction du réseau transparent de la deuxième graduation de mesure (21),
- les faisceaux de rayons partiels se propagent dans la direction du réseau transparent de la deuxième graduation de mesure (21) et y subissent de nouveau une réfraction,
- les faisceaux de rayons partiels réfractés se propagent dans la direction de la première graduation de mesure (11 ; 111), où il se produit une superposition des faisceaux de rayons partiels, et
- les faisceaux de rayons partiels superposés se propagent dans la direction des éléments détecteurs (3.1, 3.2, 3.3) du système détecteur de manière à ce que
- des signaux de position donnant la position relative des deux étalons de mesure (10, 20) peuvent être générées par balayage optique des deux étalons de mesure (10, 20).
